# EUROPEAN PATENT SPECIFICATION

(11) **EP 1 937 014 B1**
(45) Date of publication and mention of the grant of the patent: **25.07.2018**
(21) Application number: 06026471.0
(22) Date of filing: 20.12.2006
(51) Int. Cl.: H04W 4/02, H04L 29/08

(54) **Method for determining the applicability of location dependent features to a communication connection within a mobile communication network, sensing device and network unit**
Verfahren zur Bestimmung der Anwendbarkeit von ortsabhängigen Funktionen auf eine Kommunikationsverbindung innerhalb eines Mobilkommunikationsnetzwerks, Messvorrichtung und Netzwerkeinheit
Procédé de détermination de l'applicabilité de fonctions dépendant de l'emplacement à une connexion de communication sur un réseau de communication mobile, capteur et unité réseau

(43) Date of publication of application: 25.06.2008
(73) Proprietor: Vodafone GmbH, 40549 Düsseldorf (DE)
(72) Inventor: Moutarazak, Said, 6163 BP Geleen (NL)
(74) Representative: Cullinane, Marietta Bettina

(56) References cited:
- WO-A2-99/37109
- US-A1- 2002 128 012
- US-A1- 2003 013 460

## Description

The present invention relates to a method for determining the applicability of location dependent features to a communication connection within a mobile communication network, in particular a cellular network, as well as to a sensing device and a network unit for use in such a method.

In communication networks, it is desirable to handle communication connections between mobile terminals of the communication network differently depending on the present location of at least one of the mobile terminals. In particular, different billing rules may be applied to communication connections depending on the location of the mobile terminal from which the call is initiated. In cellular networks it is possible to obtain the information necessary to determine the present location of the mobile terminal by means of cell information or location area information. The thus obtained information can be processed in the mobile terminal to compare whether the mobile terminal is within a subscriber area, where the communication to and from the mobile terminal takes place under certain conditions. As such methods are performed by software applications implemented on the mobile terminal specially designed mobile terminals have to be used.

In order to overcome this drawback EP 1 467 587 A1 suggests a module to be inserted into the mobile terminal, where the means for establishing whether the mobile terminal is located within a certain subscriber area are disposed on the module or on a determining unit which can be accessed by remote interrogation by the mobile terminal.

In WO 99/37109 A2 a cellular radio system is described which comprises at least two measuring means for locating a mobile station. The measuring means according to one embodiment may be separate from other network equipment. The measuring means can, for example, communicate with a Mobile Positioning Center, which is part of the network, via wireless connection or the Internet. The measuring unit collects measurement data for terminal location methods. For this purpose the measuring means has an antenna for receiving signals that are to be monitored and a transceiver unit for communicating with the network. Depending on the location method to be used, the measuring means will measure the signal's direction (for DF), the time of arrival of the signal (TOA) or the RTD measurement (OTD). The measuring results are transmitted to the MPC, where the location is determined. Also the co-ordinates of the measuring device may be determined and transmitted to the MPC. The result of the position determination will be used to determine applicability of services dependent on location, such as pricing of calls.

US 2003/013460 A1 describes a method and an apparatus for detecting the presence of mobile terminals. In this method a location detector is provided which may listen to and detect signals from a mobile terminal to a base station. The received signal is compared to the signal received at the base station and the location of the mobile terminal can thus be determined.

One drawback of the known methods is that the subscriber area which can be observed is comparatively large and thus specific rules can only be applied within such large areas. In addition the processing for determining the present location of the mobile terminal requires considerable processing power. Also the backend processes needed to maintain accurate data bases for these methods is challenging.

The problem to be solved by the present invention is thus to overcome these drawbacks of the prior art solutions.

The invention is based on the finding that the problem can be solved by using data and information, which is independent of the absolute position of the mobile terminal, to determine the applicability of location or area based features to a communication connection.

The problem is solved by a method according to independent claim 1, a sensing device according to claim 10 and a network unit according to claim 12. Further features and advantageous embodiments will become apparent from the dependent claims and the description. Advantages and features described with respect to the inventive method also apply to the sensing device and the network unit accordingly and vice versa.

According to a first aspect, the present invention relates to a method for determining the applicability of location dependent features to a communication connection within a mobile communication network comprising at least one radio access network node, at least one network unit and at least one mobile terminal. The method is characterized in that a sensing device detects at least one signal of uplink traffic from the communication between the mobile terminal and the at least one radio access network node and transmits the received signal and at least one piece of information data of the sensing device, which is unique to the sensing device, to the at least one network unit for examination whether a link between the sensing device and the mobile terminal is registered and for determination of applicability of location dependent features based on the availability of a registered link and on the relative position of the mobile terminal to the sensing device.

According to the present invention, location dependent features are rules defining the processing of a communication connection within the mobile communication network. In particular, location dependent features may be billing rules, such as reduced rates, or other services, containing the location of the mobile terminal as a parameter. The communication connection may be a connection for transmission of voice or other data. The invention will be described hereinafter mainly with respect to a GSM (global system mobile) radio access network. The invention may, however also be applied to networks using other technologies such as GPRS (general packet radio service) or HSCSD (high speed circuit switched data) based on GSM. The radio access network may also be a UTRAN (UMTS Terrestrial Radio Access Network), other 3G networks or 4G networks. The radio access network node may be for example a base station (BS) or node B (NB). The network unit according to the present invention is preferably incorporated within or connected to the core network (CN) of the communication network. The mobile terminal may be a mobile phone a PDA or laptop capable of communication with the radio access network node.

The sensing device according to the present invention is independent from the communication network, i.e. does not form an integral part thereof. The sensing device is, however, equipped to communicate with network units and to monitor signals within the communication network. The communication between the radio access network node and the mobile terminal within a communication network is generally a bidirectional communication, wherein signals are being transmitted and received from the mobile terminal as well as from the radio access network node. The communication which is monitored or tapped by the sensing device and from which signals may be detected is uplink traffic, wherein a signal originates from the mobile terminal.

The sensing device may be set to and / or can be adjusted to detect signals in the frequency range of control channels of a mobile communication standard, in particular GSM, UMTS and/or any 3G or 4G-standard. The frequency range may be for example 890-915 MHz and/or 935-960 MHz for a GSM standard network. By monitoring signals within such frequency ranges, signals on control channels can be detected.

The detected signal will be transmitted from the sensing device together with a piece of information data of the sensing device. This piece of information data is unique to the sensing device and may for example be the MAC (medium access control) address of the sensing device. The information data may be stored on the sensing device. With this unique piece of information data a link of the sensing device with a mobile terminal can be verified. The link according to the present invention is not a physical but a registered link, i.e. an association of the two devices which is stored in the network or in a connected database.

With the inventive method it will be possible to determine whether the mobile terminal is within the vicinity of the sensing device, as the signal from the mobile terminal will only be detectable from the sensing device, if the mobile terminal is close by. Hence, the relative position of the mobile terminal to the sensing device will be used to determine the applicability of location dependent features. The area within which such features apply can be smaller than the subscriber area which can be monitored by the prior art solutions. A more detailed and thus accurate application of features is possible. In addition, no changes to the mobile terminal are necessary, as the required information will be obtained by signals emitted from the mobile terminal in normal use. Also the processing of the signals and the determination of the relation or the link of the mobile terminal to the sensing device will be performed outside of the mobile terminal. Finally, the change of position of the sensing device, which might occur, when the user of the mobile terminal moves house, does not require any changes to the data and information stored for the location dependent features, as the applicability of these features will be decided upon the relative position of the terminal to the sensing device.

Before transmitting the received signal and the at least one piece of information data, the sensing device, according to one embodiment of the present invention, determines the signal power of the received signal and compares the signal power to a threshold value.

The signal power hereinafter denotes the strength of signal. The threshold value may be stored in the sensing device or may be given by the sensitivity of the sensor used within the sensing device. The comparison in the latter case will be carried out by the detection or non-detection of a signal. If the threshold value is stored in the sensing device, the comparison between the signal power of the received signal and the threshold value may be performed in a separate comparison unit within the sensing device.

The advantage of verifying a preset signal power leads to an improved result of the inventive method, as signals from mobile terminals passing by the sensing device in a larger distance will not be forwarded to the network unit. As the availability of a registered link for such mobile terminals is unlikely, the processing power for performing the inventive method can be reduced and the method is thus facilitated. In addition, the setting of a threshold value will define the size of the area within which location dependent features may be applied. If the threshold value is altered or a different sensor is used in the sensing device the size of the area can be adjusted. Hence, this embodiment allows for a flexible management of applicability of location dependent features.

According to one embodiment, the at least one network unit receives an information signal comprising the signal received at the sensing device and the information data of the sensing device and extracts the information data and at least one piece of identification data from the information signal.

The information signal will be generated in the sensing device by adding information data of the sensing device to the received signal from the mobile terminal. The thus generated and transmitted information signal will be processed in the network unit. The extraction of information data and at least one piece of identification data can be performed by checking for data in predetermined fields or positions of the signal. If data is found in the specific field or position, it may be used for further processing. If no data is available, a respective signal will be generated.

By extracting information data and identification data from the received information signal, unique information of the mobile terminal and the sensing device will be available for further processing.

According to a preferred embodiment, the network unit compares the extracted information data and identification data to entries of a data base.

The data base against which the data is compared, is preferably network based and managed and updated by the network operator. Entries relating to the identity of the mobile terminal and information relating to the sensing device are stored in the data base. The data can be stored in fields or tables, wherein for each sensing device at least one mobile terminal is indicated. The assigning of a mobile terminal to a sensing device, i.e. the entry of identification data and information data into the data base may be performed by the network operator, if the user of the mobile terminal signs up for a respective service. In addition a field or flag may be provided in the data base, where the current position of the mobile terminal in the vicinity of the sensing device can be indicated. The comparison of the extracted data and the entries of a data base are being performed to determine whether a link or relation between the sensing device, indicated by the extracted information data, and the mobile terminal, indicated by the extracted identification data, is stored in the data base.

Preferably at least one entry of the data base is changed depending on the comparison result.

The changing of a data base entry may be the changing of an assigned value of an entry or the addition of an entry. The change is initiated by the network unit based on the comparison result. Preferably the entry which is changed is the entry which indicates whether the mobile terminal is currently in the vicinity of the sensing device. The change may for example be setting a value from 0 to 1 if the mobile terminal is within the preset area around the sensing device. Alternatively, a respective flag may be set.

By changing the entries of the data base to reflect the current position of the mobile terminal relative to the sensing device, the data base will display the actual situation to other network entities.

If the signal originally detected at the sensing device and forwarded to the network unit does not contain identification data of the mobile terminal, the network unit will transmit a challenge to the mobile terminal linked to the sensing device corresponding to the extracted information data in the data base.

The lack or absence of identification data within the signal will be detected during the extraction of data from the information signal at the network unit. The challenge which will be transmitted to the mobile terminal may be a request for identification of the user or the mobile terminal. The response to the challenge may be the transmission of information read from the mobile terminal or the transmission of information entered by the user at the mobile terminal. The challenge is preferably transmitted to the mobile terminal via the mobile communication network, e.g. by using USSD commands. The response to the challenge will be transmitted to the network unit via the sensing device.

With this embodiment it will be possible to also apply location dependent features to a communication connection, if the signal originally detected at the sensing device did not contain sufficient data. By sending a challenge to the mobile terminal which according to the data base is linked to the sensing device, the accidental application of rules to a mobile device whose user is not entitled to these rules can be avoided.

According to one embodiment of the invention, a central control unit for managing the communication connection of a mobile terminal in the communication network accesses a data base, wherein entries relating to the identity of the mobile terminal and information relating to the sensing device are stored.

The central control unit of the mobile communication network may for example be the mobile switching centre (MSC). Such a control unit may access the data base, i.e. retrieve entries or information from the data base, when a communication connection is initiated from a mobile device. By accessing the data base, the unit may obtain the information necessary to apply or not to apply specific rules, in particular location dependent features. Finally, the central control unit may access the data base to change the entry reflecting the relative position of the mobile terminal to the sensing device. The advantages and effects of such a change will be described later.

The central control unit will preferably, before accessing the data base, read information from a register, e.g. the home location register (HLR) assigned to the central control unit. In the HLR information on whether the user of the specific mobile terminal has signed up for the required service may be stored. If the user has signed up for the service the central control unit will then access the data base to retrieve whether the present position of the mobile terminal allows an application of the location dependent features for the presently initiated communication connection.

The central control unit may also accesses the data base upon termination of a communication connection of the mobile terminal. The termination of a communication connection of the mobile terminal is the ending of a for example a phone call. By accessing the data base from the central control unit it will be possible to change an entry in the data base at the end of a communication connection. In particular, the indication, i.e. the entry or flag, of whether the mobile terminal is in a vicinity of the sensing device within which the location dependent features should apply can be changed. Thereby, the data base will be up to date. And an application of the location based features to a subsequent communication connection initiated by the mobile terminal will only occur if the position of the mobile terminal has been verified again by the network unit and the entry has been changed by the network unit.

According to another aspect, the present invention relates to a sensing device for detecting signals originating from at least one mobile terminal in a mobile communication network. The sensing device is characterized in that it comprises a sensing unit for detecting at least one signal from the uplink traffic of the communication between the mobile terminal and at least one radio access network node of the mobile communication network, the sensing device comprises at least one communication interface unit for communicating with at least one network unit of the communication network and the sensing device comprises a processing unit for processing a signal received from the at least one mobile terminal with information data of the sensing device to generate an information signal to be transmitted via the communication interface for determination of applicability of location dependent features based on the availability of a registered link and on the relative position of the mobile terminal to the sensing device.

The sensing unit will be able to sense, detect or tap the communication between the radio access network node and the mobile terminal, namely the uplink traffic of such communications. The sensing unit may comprise a diode or other appropriate sensing means. It is also within the scope of the invention that the sensing unit may comprises a storage unit for storing received signals as well as or alternatively for storing a threshold value for the signal power. The communication interface may be an interface to allow access to the Internet or other appropriate communication channels. Preferably, the communication via the communication interface is unidirectional, i.e. the interface allows transmission from the sensing device but no transmission to the sensing device. Via this communication interface received signals from mobile terminals together with information data of the sensing device can be transmitted. The communication interface is thus connected to the sensing unit to transmit received signals.

The sensing device may further comprise at least one evaluation unit for evaluating the power of the received signal. The evaluation of the signal power will be performed by comparison against a threshold value. Alternatively, the evaluation unit may be integral with the sensing unit. In this case the evaluation unit may be a property of the sensing unit, in particular the sensitivity of the sensor.

The sensing device further comprises a processing unit for processing a signal received from the at least one mobile terminal with information data of the sensing device to generate an information signal to be transmitted via the communication interface. The processing of the received signal is preferably the addition of information data to the signal. This addition may be an integration of the information data in the received signal or a simultaneous transmission of the received signal and the information data to form an information signal. By processing the received signal within the sensing device, it can be ensured that the connection of a signal from a mobile terminal and information data of the sensing device will be apparent at a unit receiving the information signal from the sensing device.

According to another aspect, the present invention relates to a network unit of a communication network. The network unit is characterized in that it comprises a receiving unit for receiving an information signal from a sensing device, which senses signals form an uplink traffic of a communication between a mobile terminal and at least one radio access network node, an extraction unit for extracting information data of the sensing device, which is unique to the sensing device, and identification data of a mobile terminal from the received information signal and an interface for communication with a data base for determination of applicability of location dependent features based on the availability of a registered link and on the relative position of the mobile terminal to the sensing device. The extraction unit may be a filter. The interface for communication preferably allows bidirectional communication between the network unit and the data base.

The network unit may further comprise a comparison unit for comparing the extracted information data and identification data with entries of the data base.

The interface for communication with the data base is preferably a bidirectional interface for obtaining entries from the data base and for changing entries of the data base.

Finally the network unit may comprise an interface for communication with the central control unit (MSC) for transmitting challenges to be forwarded to a mobile terminal. This interface will be used in cases where the originally received signal from the mobile terminal did not contain identification data of the mobile terminal. The interface may be set up to transmit unstructured supplementary service data (USSD). The units of the entities of the present invention, in particular of the sensing device and the network unit may be realized by hardware units and/or software units. The units may also at least partially be combined to form one integral unit.

The invention will now be described again with reference to the enclosed figure, wherein:

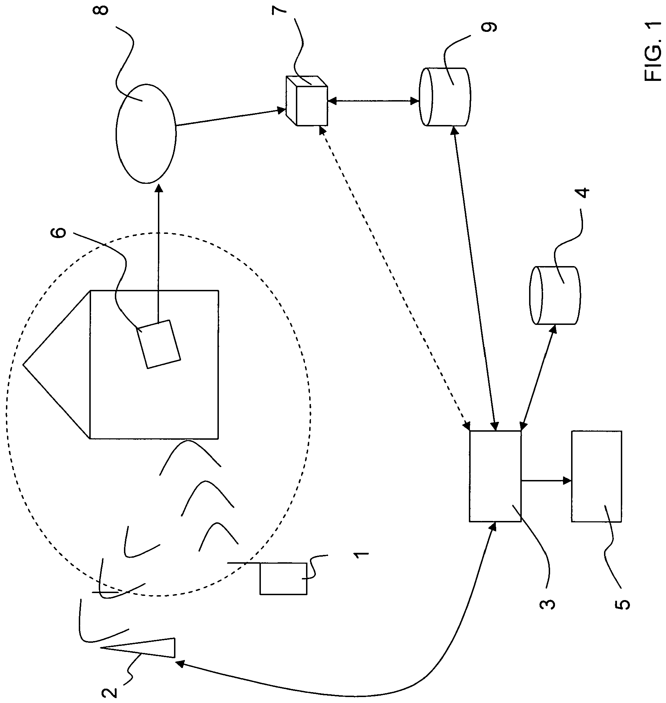

Figure 1 shows a schematic view of a setup to be used with the inventive method.

In Figure 1 a mobile terminal 1, depicted as a mobile phone, is shown, which can communicate with other mobile terminals 1 or other devices (not shown) within a mobile communication network. The mobile communication network is represented by a base station 2. The base station 2 is connected to a central management unit, in particular a mobile switching centre MSC 3. The MSC 3 is connected to a register 4, in particular a home location register HLR, and also communicates with a billing centre 5.

When a phone call is initiated by the mobile phone 1, signals will be emitted by the mobile phone 1 and will be received at the base station 2. The received signals will be forwarded to the MSC 3 from where further routing of the call and the ultimate call setup will be controlled.

During call setup and also while a phone call is being conducted from the mobile phone 1, signalling between the base station 2 and the mobile phone 1 will occur.

In the depicted setup a sensing device 6 is located in a building, for example the home of the owner of the mobile phone 1. The sensing device 6 may be a small box. The sensing device 6 is equipped to monitor its surrounding for and listens to signals originating from mobile phones 1. The sensing device 6 may be designed to only detect signals above a predetermined signal strength or power. Alternatively, the sensing device 6 may have a threshold value stored within and will filter signals below the threshold value for signal strength or power.

If the sensing device 6 detects a signal of a strength above the threshold value, the sensing device 6 is triggered to transmit the received signal to a network unit 7, which will hereinafter also be referred to as a Unique Identifier Catcher UC. This network unit 7 is provided at the network side of the setup. The transmission from the sensing device 6 to the network unit 7 may be realized via the Internet 8 or other appropriate communication channels.

Together with the signal which was originally received at the sensing device 6, the sensing device 6 will transmit information data relating to the identity of the sensing device 6. The transmission may be in the form of an information signal, which comprises the originally received or detected signal and the information data of the sensing device 6.

The network unit 7 receives the information signal and will extract identification data which is unique to the mobile phone 1 and/or the user of the mobile phone from the information signal. Such unique identification data may be the MSISDN, which is stored on the mobile phone 1 and transmitted during the signalling between the base station 2 and the mobile phone 1. In addition, the network unit 7 will extract information data from the information signal, which is representative of the sensing device 6. Such information data may be the MAC address of the sensing device 6.

The thus extracted data will be compared against entries of a data base 9, which will hereinafter be referred to as Home Zone Database HZD. The network unit 7 will identify whether the unique identification data of the user or mobile phone 1 is linked within the data base 9 to the information data of the sensing device 6, from which the information signal has been received.

The data base 9 contains fields with entries on the information data, e.g. MAC address of sensing devices 6 as well as fields with entries on a unique identifier of mobile phones 1 or the user thereof, e.g. the MSISDN. In addition, the data base 9 contains fields with entries that provide information on whether the mobile phone 1 is in the vicinity of the sensing device 6. In the depicted setup, this information will reflect whether the user and his mobile phone 1 are at home or not.

The entries for the fields of information data and identification data are filled during the provisioning phase. During this phase, which can be the selling of the service or product to the user of the mobile phone 1 the information data of the sensing device 6 can be entered into the data base 9. The entry can be established by scanning the sensing device 6 or a label provided thereon. The thus entered information data, e.g. the MAC address of the sensing device 6 will be linked to the identification data, e.g. the MSISDN of the mobile phone 1. The identification data an the link will be provided by the salesmen into the data base 9.

The network unit 7 will check for such a registered link, when receiving an information signal. If the sensing device 6 and the mobile phone 1 or its user are linked according to the entries in the data base 9, an entry in the data base 9 related to these entities 1, 6 will be set to a different value. In particular an entry "@home" may be set from 0 to 1. At this point in time the data base reflects the situation that the mobile phone 1 of the user is within the predefined vicinity of the sensing device 6 from which the information signal has been received.

As described before, the MSC 3 will receive information from the base station 2 about a call being set up from the mobile phone 1. Upon receipt of such an indication of a call setup, the MSC 3 will access the home location register HLR 4 to obtain information on the services to which the user of the mobile phone 1 has subscribed. Within the HLR 4 a field may be assigned for entries to indicate the service of location dependent features for communication connection. The entry in this field will be generated when the user subscribes to the service.

If the MSC 3 detects that the entry in the field indicating the service of location dependent features reflects that the user has signed up for the service of using these features, the MSC 3 will be triggered to access the data base 9. The MSC 3 will check whether the mobile phone 1 of the user is within the predefined area surrounding the sensing device 6.

If the mobile phone 1 is within the predetermined area the billing rules, e.g. CDR will be adapted in the billing centre 4 to reflect the special billing rate.

After call termination, the entry within the data base 9 reflecting the location of the mobile phone 1, e.g. the entry of the @home field will be changed and set to 0.

Thereby, the next call initiated by the mobile phone 1 but originating from a location outside of the predefined area around the sensing device 6 will not benefit from the location dependent features of the service, e.g. reduced billing rates.

## Claims

1. Method for determining the applicability of location dependent features, which are rules defining processing of a communication connection within a mobile communication network comprising at least one radio access network node (2), at least one network unit (7) and at least one mobile terminal (1), **characterized in that** a sensing device (6) detects and receives at least one signal of uplink traffic from a communication between the mobile terminal (1) and the at least one radio access network node (2), when the mobile terminal is in the vicinity of the sensing device, and transmits the received signal which may include identification data of the mobile terminal (1), and at least one piece of information data of the sensing device (6), which is unique to the sensing device (6), to the at least one network unit (7) for examination as to whether a stored association between the sensing device (6) and the mobile terminal (1) is registered and for determination of applicability of location dependent features based on the availability of a registered association and on a relative position of the mobile terminal (1) to the sensing device (6), as implied by the received signal.

2. Method according to claim 1, **characterized in that** before transmitting the received signal and the at least one piece of information data, the sensing device (6) determines the signal power of the received signal and compares the signal power to a threshold value.

3. Method according to claim 1 or 2, **characterized in that** the at least one network unit (7) receives an information signal comprising the signal received at the sensing device (6) and the information data of the sensing device (6) and extracts the information data and at least one piece of identification data from the information signal.

4. Method according to claim 3, **characterized in that** the network unit (7) compares the extracted information data and identification data to entries of a data base (9).

5. Method according to claim 4, **characterized in that** at least one entry of the data base (9) is changed depending on the comparison result.

6. Method according to any of claims 4 or 5, **characterized in that** in case of absence of identification data of the mobile terminal (1) in the received signal, the network unit (7) transmits a challenge to the mobile terminal (1) linked to the sensing device (6) corresponding to the extracted information data in the data base (9).

7. Method according to any of claims 1 to 6, **characterized in that** a central control unit (3) for managing the communication connection of a mobile terminal (1) in the communication network accesses a data base (9), wherein entries relating to the identity of the mobile terminal (1) and information relating to the sensing device (6) are stored.

8. Method according to claim 7, **characterized in that** the central control unit (3), before accessing the data base (9), reads information from a register (4) assigned to the central control unit (3).

9. Method according to claim 7 or 8, **characterized in that** the central control unit (3) accesses the data base (9) upon termination of a communication connection of the mobile terminal.

10. Sensing device for detecting signals originating from at least one mobile terminal (1) in a mobile communication network, **characterized in that** the sensing device (6) comprises a sensing unit for detecting at least one signal from the uplink traffic of a communication between the mobile terminal (1) and at least one radio access network node (2) of the mobile communication network, when the mobile terminal (1) is in a vicinity of the sensing device, wherein the sensing device (6) comprises at least one communication interface unit for communicating with at least one network unit (7) of the communication network and the sensing device comprises a processing unit for processing the signal detected which originates from the mobile terminal (1), and which may include identification data of the mobile terminal (1) with information data of the sensing device (6), which is unique to the sensing device (6), to generate an information signal to be transmitted via the communication interface to the network unit (7).

11. Sensing device according to claim 10, **characterized in that** the sensing device (6) further comprises at least one evaluation unit for evaluating the power of the received signal.

12. Network unit of a communication network, **characterized in that** the network unit (7) comprises a receiving unit for receiving an information signal from a sensing device (6) comprising a detected signal from an uplink traffic of a communication between a mobile terminal (1) and at least one radio access network node (2), the network unit further comprises an extraction unit for extracting information data of the sensing device (6), which is unique to the sensing device (6), and identification data of the mobile terminal (1) from the received information signal and an interface for communication with a data base (9) for determination, by the network unit, of applicability of location dependent features, which are rules defining processing of a communication connection within the communication network based on availability of a registered association between the sensing device and the mobile terminal and on the relative position of the mobile terminal (1) to the sensing device (6) implied by the detected signal.

13. Network unit according to claim 12, **characterized in that** the network unit (7) comprises a comparison unit for comparing the extracted information data and identification data with entries of the data base (9).

14. Network unit according to claim 12 or 13, **characterized in that** the interface for communication with the data base (9) is a bidirectional interface for obtaining entries from the data base (9) and for changing entries of the data base (9).

15. Network unit according to any of claims 12 to 14, **characterized in that** the network unit (7) comprises an interface for communication with the central control unit (3) for transmitting challenges to be forwarded to a mobile terminal (1).

## Patentansprüche

1. Verfahren zur Bestimmung der Anwendbarkeit von ortsabhängigen Merkmalen, die Regeln sind, die die Verarbeitung einer Kommunikationsverbindung in einem mobilen Kommunikationsnetz definieren, das zumindest einen Funkzugangsnetzknoten (2), zumindest eine Netzwerkeinheit (7) und zumindest ein mobiles Endgerät (1) umfasst, **dadurch gekennzeichnet, dass** eine Erfassungsvorrichtung (6) zumindest ein Signal eines Uplink-Verkehrs von einer Kommunikation zwischen dem mobilen Endgerät (1) und dem mindestens einen Funkzugangsnetzknoten (2) detektiert und empfängt, wenn das mobile Endgerät in der Nähe der Erfassungsvorrichtung ist, und das empfangene Signal, das Identifikationsdaten des mobilen Endgerätes (1) umfassen kann, und zumindest einen Teil von Informationsdaten der Erfassungsvorrichtung (6), der für die Erfassungsvorrichtung (6) einzigartig ist, an die zumindest eine Netzwerkeinheit (7) zur Überprüfung ob eine gespeicherte Assoziation zwischen der Erfassungsvorrichtung (6) und dem mobilen Endgerät (1) hinterlegt ist und zur Bestimmung der Anwendbarkeit von ortsabhängigen Merkmalen basierend auf der Verfügbarkeit einer hinterlegten Assoziation und einer relativen Position des mobilen Endgerätes (1) zu der Erfassungsvorrichtung (6), wie durch das empfangene Signal impliziert wird, überträgt.

2. Verfahren nach Anspruch 1, **dadurch gekennzeichnet, dass** vor der Übermittlung des empfangenen Signals und des mindestens einen Teils von Informationsdaten, die Erfassungsvorrichtung (6) die Signalstärke des empfangenen Signals bestimmt und die Signalstärke mit einem Schwellwert vergleicht.

3. Verfahren nach einem der Ansprüche 1 oder 2, **dadurch gekennzeichnet, dass** die zumindest eine Netzwerkeinheit (7) ein Informationssignal, das das an der Erfassungsvorrichtung (6) empfangene Signal und die Informationsdaten der Erfassungsvorrichtung (6) umfasst, empfängt und die Informationsdaten und zumindest einen Teil der Identifikationsdaten aus dem Informationssignal extrahiert.

4. Verfahren nach Anspruch 3, **dadurch gekennzeichnet, dass** die Netzwerkeinheit (7) die extrahierten Informationsdaten und Identifikationsdaten mit Einträgen einer Datenbank (9) vergleicht.

5. Verfahren nach Anspruch 4, **dadurch gekennzeichnet, dass** zumindest ein Eintrag der Datenbank (9) abhängig von dem Vergleichsergebnis geändert wird.

6. Verfahren nach einem der Ansprüche 4 oder 5, **dadurch gekennzeichnet, dass** im Fall des Fehlens von Identifikationsdaten des mobilen Endgerätes (1) in dem empfangenen Signal, die Netzwerkeinheit (7) eine Abfrage an das mobile Endgerät (1) übermittelt, das mit der Erfassungsvorrichtung (6) verbunden ist, die mit den extrahierten Informationsdaten in der Datenbank (9) korrespondiert.

7. Verfahren nach einem der Ansprüche 1 bis 6, **dadurch gekennzeichnet, dass** eine zentrale Steuereinheit (3) zur Handhabung der Kommunikationsverbindung eines mobilen Endgerätes (1) in dem Kommunikationsnetz auf eine Datenbank (9) zugreift, in der Einträge, die sich auf die Identität des mobilen Endgerätes (1) beziehen, und Informationen, die sich auf die Erfassungsvorrichtung (6) beziehen, gespeichert sind.

8. Verfahren nach Anspruch 7, **dadurch gekennzeichnet, dass** die zentrale Steuereinheit (3) vor dem Zugriff auf die Datenbank (9) Informationen von einem Register (4) ausliest, das der zentralen Steuereinheit (3) zugeordnet ist.

9. Verfahren nach einem der Ansprüche 7 oder 8, **dadurch gekennzeichnet, dass** die zentrale Steuereinheit (3) bei Beendigung einer Kommunikationsverbindung des mobilen Endgerätes auf die Datenbank (9) zugreift.

10. Erfassungsvorrichtung zum Detektieren von Signalen, die von zumindest einem mobilen Endgerät (1) in einem mobilen Kommunikationsnetz stammen, **dadurch gekennzeichnet, dass** die Erfassungsvorrichtung (6) eine Erfassungseinheit zum Detektieren von zumindest einem Signal aus dem Uplink-Verkehr einer Kommunikation zwischen dem mobilen Endgerät (1) und zumindest einem Funkzugangsnetzknoten (2) des mobilen Kommunikationsnetzes, wenn das mobile Endgerät (1) in einer Nähe der Erfassungsvorrichtung ist, umfasst, wobei die Erfassungsvorrichtung (6) zumindest eine Kommunikationsschnittstelleneinheit zum Kommunizieren mit zumindest einer Netzwerkeinheit (7) des Kommunikationsnetzes umfasst und die Erfassungsvorrichtung eine Verarbeitungseinheit zur Verarbeitung des erkannten Signals, das von dem mobilen Endgerät (1) stammt und das Identifikationsdaten des mobilen Endgerätes (1) einschließen kann, mit Informationsdaten der Erfassungsvorrichtung (6), die einzigartig für die Erfassungsvorrichtung (6) sind, zur Erzeugung eines Informationssignals, das über die Kommunikationsschnittstelle der Netzwerkeinheit (7) übermittelt werden soll, umfasst.

11. Erfassungsvorrichtung nach Anspruch 10, **dadurch gekennzeichnet, dass** die Erfassungsvorrichtung (6) weiterhin zumindest eine Bewertungseinheit zum Bewerten der Stärke des empfangenen Signals umfasst.

12. Netzwerkeinheit eines Kommunikationsnetzes, **dadurch gekennzeichnet, dass** die Netzwerkeinheit (7) eine Empfangseinheit umfasst zum Empfangen eines Informationssignals von einer Erfassungsvorrichtung (6), das ein detektiertes Signal eines Uplink-Verkehrs einer Kommunikation zwischen einem mobilen Endgerät (1) und zumindest einem Funkzugangsnetzknotens (2) umfasst, wobei die Netzwerkeinheit weiterhin eine Extraktionseinheit zum Extrahieren von Informationsdaten der Erfassungsvorrichtung (6), die einzigartig für die Erfassungsvorrichtung (6) sind, und Identifikationsdaten des mobilen Endgerätes (1) von dem empfangenen Informationssignal umfasst und eine Schnittstelle zur Kommunikation mit einer Datenbank (9) umfasst zum Bestimmen der Anwendbarkeit von ortsabhängigen Merkmalen durch die Netzwerkeinheit, die Regeln darstellen, die die Verarbeitung der Kommunikationsverbindung in dem Kommunikationsnetz basierend auf der Verfügbarkeit einer hinterlegten Assoziation zwischen der Erfassungsvorrichtung und dem mobilen Endgerät und auf der relativen Position des mobilen Endgerätes (1) zu der Erfassungsvorrichtung (6), welche durch das detektierte Signal impliziert wird, definieren.

13. Netzwerkeinheit gemäß Anspruch 12, **dadurch gekennzeichnet, dass** die Netzwerkeinheit (7) eine Vergleichseinheit zum Vergleichen der extrahierten Informationsdaten und Identifikationsdaten mit Einträgen der Datenbank (9) umfasst.

14. Netzwerkeinheit gemäß Anspruch 12 oder 13, **dadurch gekennzeichnet, dass** die Schnittstelle zur Kommunikation mit der Datenbank (9) eine bidirektionale Schnittstelle zum Beschaffen von Einträgen von der Datenbank (9) und zum Ändern von Einträgen der Datenbank (9) ist.

15. Netzwerkeinheit gemäß einem der Ansprüche 12 bis 14, **dadurch gekennzeichnet, dass** die Netzwerkeinheit (7) eine Schnittstelle zur Kommunikation mit der zentralen Steuereinheit (3) zum Übermitteln einer Abfrage, die an das mobile Endgerät (1) weitergeleitet werden soll, umfasst.

## Revendications

1. Procédé de détermination de l'applicabilité de fonctions dépendant de l'emplacement, qui sont des règles définissant le traitement d'une connexion de communication au sein d'un réseau de communication mobile comprenant au moins un noeud de réseau d'accès radio (2), au moins une unité de réseau (7) et au moins un terminal mobile (1), **caractérisé en ce qu'**un dispositif de détection (6) détecte et reçoit au moins un signal de trafic de liaison montante en provenance d'une communication entre le terminal mobile (1) et l'au moins un noeud de réseau d'accès radio (2), lorsque le terminal mobile est à proximité du dispositif de détection, et transmet le signal reçu qui peut inclure des données d'identification du terminal mobile (1), et au moins un élément de données d'informations du dispositif de détection (6), qui est propre au dispositif de détection (6), à l'au moins une unité de réseau (7) pour examiner si une association stockée entre le dispositif de détection (6) et le terminal mobile (1) est enregistrée et pour la détermination de l'applicabilité de fonctions dépendant de l'emplacement sur la base de la disponibilité d'une association enregistrée et d'une position relative du terminal mobile (1) par rapport au dispositif de détection (6), tel qu'impliqué par le signal reçu.

2. Procédé selon la revendication 1, **caractérisé en ce que**, avant de transmettre le signal reçu et l'au moins un élément de données d'informations, le dispositif de détection (6) détermine la puissance de signal du signal reçu et compare la puissance de signal à une valeur seuil.

3. Procédé selon la revendication 1 ou 2, **caractérisé en ce que** l'au moins une unité de réseau (7) reçoit un signal d'informations comprenant le signal reçu au niveau du dispositif de détection (6) et les données d'informations du dispositif de détection (6) et extrait les données d'informations et au moins un élément de données d'identification du signal d'informations.

4. Procédé selon la revendication 3, **caractérisé en ce que** l'unité de réseau (7) compare les données d'informations et les données d'identification extraites à des entrées d'une base de données (9).

5. Procédé selon la revendication 4, **caractérisé en ce qu'**au moins une entrée de la base de données (9) est changée selon le résultat de comparaison.

6. Procédé selon l'une quelconque des revendications 4 ou 5, **caractérisé en ce qu'**en cas d'absence de données d'identification du terminal mobile (1) dans le signal reçu, l'unité de réseau (7) transmet une demande d'accès au terminal mobile (1) lié au dispositif de détection (6) correspondant aux données d'informations extraites dans la base de données (9).

7. Procédé selon l'une quelconque des revendications 1 à 6, **caractérisé en ce qu'**une unité centrale de commande (3) pour gérer la connexion de communication d'un terminal mobile (1) dans le réseau de communication accède à une base de données (9), dans lequel des entrées relatives à l'identité du terminal mobile (1) et des informations relatives au dispositif de détection (6) sont stockées.

8. Procédé selon la revendication 7, **caractérisé en ce que** l'unité centrale de commande (3), avant d'accéder à la base de données (9), lit des informations en provenance d'un registre (4) attribué à l'unité centrale de commande (3).

9. Procédé selon la revendication 7 ou 8, **caractérisé en ce que** l'unité centrale de commande (3) accède à la base de données (9) à la fin d'une connexion de communication du terminal mobile.

10. Dispositif de détection pour détecter des signaux provenant d'au moins un terminal mobile (1) dans un réseau de communication mobile, **caractérisé en ce que** le dispositif de détection (6) comprend une unité de détection pour détecter au moins un signal du trafic de liaison montante d'une communication entre le terminal mobile (1) et au moins un noeud de réseau d'accès radio (2) du réseau de communication mobile, lorsque le terminal mobile (1) est à proximité du dispositif de détection, dans lequel le dispositif de détection (6) comprend au moins une unité d'interface de communication pour communiquer avec au moins une unité de réseau (7) du réseau de communication et le dispositif de détection comprend une unité de traitement pour traiter le signal détecté qui provient du terminal mobile (1) et qui peut inclure des données d'identification du terminal mobile (1) avec des données d'informations du dispositif de détection (6), qui sont propres au dispositif de détection (6), pour générer un signal d'informations à transmettre via l'interface de communication à l'unité de réseau (7).

11. Dispositif de détection selon la revendication 10, **caractérisé en ce que** le dispositif de détection (6) comprend en outre au moins une unité d'évaluation pour évaluer la puissance du signal reçu.

12. Unité de réseau d'un réseau de communication, **caractérisée en ce que** l'unité de réseau (7) comprend une unité de réception pour recevoir un signal d'informations en provenance d'un dispositif de détection (6) comprenant un signal détecté d'un trafic de liaison montante d'une communication entre un terminal mobile (1) et au moins un noeud de réseau d'accès radio (2), l'unité de réseau comprend en outre une unité d'extraction pour extraire des données d'informations du dispositif de détection (6), qui sont propres au dispositif de détection (6), et des données d'identification du terminal mobile (1) à partir du signal d'informations reçu et une interface pour communiquer avec une base de données (9) pour la détermination, par l'unité de réseau, de l'applicabilité de fonctions dépendant de l'emplacement, qui sont des règles définissant un traitement d'une connexion de communication au sein du réseau de communication sur la base de la disponibilité d'une association enregistrée entre le dispositif de détection et le terminal mobile et de la position relative du terminal mobile (1) par rapport au dispositif de détection (6) impliqué par le signal détecté.

13. Unité de réseau selon la revendication 12, **caractérisée en ce que** l'unité de réseau (7) comprend une unité de comparaison pour comparer les données d'informations et les données d'identification extraites à des entrées de la base de données (9).

14. Unité de réseau selon la revendication 12 ou 13, **caractérisée en ce que** l'interface pour communiquer avec la base de données (9) est une interface bidirectionnelle pour obtenir des entrées à partir de la base de données (9) et pour changer des entrées de la base de données (9).

15. Unité de réseau selon l'une quelconque des revendications 12 à 14, **caractérisée en ce que** l'unité de réseau (7) comprend une interface pour communiquer avec l'unité centrale de commande (3) pour transmettre des demandes d'accès à réacheminer à un terminal mobile (1).
